# EUROPÄISCHE PATENTSCHRIFT

(11) **EP 3 650 740 B1**
(45) Veröffentlichungstag und Bekanntmachung des Hinweises auf die Patenterteilung: **30.12.2020**
(21) Anmeldenummer: 18204599.7
(22) Anmeldetag: 06.11.2018
(51) Int. Cl.: F16P 3/14, B25J 9/00

(54) **SICHERHEITSSYSTEM UND VERFAHREN ZUM ÜBERWACHEN EINER MASCHINE**
SAFETY SYSTEM AND METHOD FOR MONITORING A MACHINE
SYSTÈME DE SÉCURITÉ ET PROCÉDÉ DE SURVEILLANCE D'UNE MACHINE

(43) Veröffentlichungstag der Anmeldung: 13.05.2020
(73) Patentinhaber: SICK AG, 79183 Waldkirch (DE)
(72) Erfinder: Hofmann, Christoph, 79194 Gundelfingen (DE); Albert, Magnus, 79104 Freiburg (DE)

(56) Entgegenhaltungen:
- WO-A1-2005/115700
- US-A- 5 083 073

## Beschreibung

Die Erfindung betrifft ein Sicherheitssystem und ein Verfahren zum Überwachen einer Maschine nach dem Oberbegriff von Anspruch 1 beziehungsweise 11.

Das Sicherheitssystem wird eingesetzt, um Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Herkömmlich werden vor allem optoelektronische Sensoren wie Lichtgitter oder Laserscanner für eine sicherheitstechnische Überwachung eingesetzt. In jüngerer Zeit treten 3D-Kameras hinzu. Ein gängiges Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus.

In der Sicherheitstechnik eingesetzte Sensoren müssen besonders zuverlässig arbeiten und deshalb hohe Sicherheitsanforderungen erfüllen, beispielsweise die Norm EN 13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile.

Ein besonders wichtiges Beispiel einer abzusichernden Maschine ist ein Roboter, der deshalb im Folgenden immer wieder stellvertretend für eine abzusichernde Maschine betrachtet wird. Gerade bei Robotern und speziell Leichtbaurobotern besteht ein zunehmender Wunsch nach engerer Zusammenarbeit mit Personen (MRK, Mensch-Roboter-Kollaboration). Dafür sind etablierte Ansätze der Sicherheitstechnik wie die Überwachung von Schutzfeldern nur bedingt geeignet. Ein alternatives Vorgehen ist unter "Speed-and-Separation" bekannt, bei dem die Einhaltung eines Sicherheitsabstands zwischen Objekt und Gefahrenstelle überwacht wird, wobei der Sicherheitsabstand von der Relativgeschwindigkeit abhängen kann. Relevante Normen in diesem Zusammenhang sind beispielsweise ISO13854, ISO 13855, ISO 13857, die sich mit Festlegung von Sicherheitsabständen befassen, sowie die ISO 10218 für Industrieroboter oder die ISO 15066 für kollaborierende Roboter (ISO 15066).

"Speed-and-Separation" ist sehr vielversprechend, aber zugleich eine große technische Herausforderung. Es ist nicht nur Wissen über die Objekte und speziell Personen in der Umgebung der Maschine erforderlich, was soweit auch für eine Schutzfeldüberwachung erforderlich war. Um wirklich enge Zusammenarbeit zu ermöglichen, genügt es nicht, eine bewegliche Maschine wie einen Roboterarm eines womöglich noch insgesamt beweglichen Roboters durch eine großzügig auf den schlimmsten Fall ausgelegte Umhüllende zu umgeben. Vielmehr ist auch die aktuelle Position und Bewegung der Maschine auf sichere Weise zu erfassen, um Sicherheitsabstände dynamisch auf die tatsächliche Gefahr beziehen zu können.

Nun sind Roboter zwar herkömmlich mit einer Sensorik versehen, um ihre Eigenposition zu bestimmen. Dafür sind üblicherweise die jeweiligen Gelenke mit Drehgebern versehen. Deren Messungen werden für die Automatisierungsaufgaben des Roboters verwendet. Sie sind aber nicht sicher im oben diskutierten Sinne, entsprechen also insbesondere keinem normierten Sicherheitsniveau (SIL, Safety Integrity Level).

Es gibt einige Roboter, die mit ihren Bewegungen Sicherheitsvolumina einhalten, also im Sinne der Sicherheitstechnik garantieren können, diese Sicherheitsvolumina nicht zu verlassen. Nach einem verwandten Konzept werden von manchen Robotern sichere Grenzen angegeben, die bei einer geplanten Trajektorie nicht überschritten werden. Die genaue Position innerhalb der Sicherheitsvolumina beziehungsweise die genaue Bewegungsbahn bleiben dabei jedoch weiterhin unbekannt. Das begrenzt die mögliche Annäherung von Personen an die Maschine in einer MRK-Anwendung, denn die Sicherheitsabstände müssen sich an den Sicherheitsgrenzen orientieren und nicht der tatsächlichen Bewegung, sind folglich überschätzt.

Insgesamt gibt es daher keine zufriedenstellende Lösung, die für Speed-and-Separation gewünschten sicheren Positionsangaben über die Maschine zu erhalten. Zudem bleiben etwaige Verbesserungen bisher dem Roboterhersteller vorbehalten, da von außen nur Zugriff auf die bereitgestellten Informationen besteht, und das häufig auch noch über proprietäre Datenschnittstellen, die von Hersteller zu Hersteller und teilweise auch von Roboter zu Roboter variieren.

In der US 2014/0350839 A1 wird ein mobiler Roboter beschrieben, der sich selbst mittels Überwachung der Drehstellungen und Bewegung seiner Räder sowie eines optischen Systems lokalisiert. Das geschieht aber nicht, um Sicherheitsniveaus einzuhalten, sondern weil keines der einzelnen Lokalisierungsverfahren genau genug ist, um den Roboter zu navigieren. Außerdem bezieht sich die Lokalisierung auf den Roboter als Ganzes, nicht auf dessen bewegliche Teile wie einen Roboterarm. Der in US 2014/0350839 A1 beschriebene Roboter ist ein einfacher diskusförmiger automatischer Staubsauger, der solche gegen den Roboter beweglichen Teile nicht besitzt und ohnehin keiner Absicherung bedarf, weil er gar nicht in der Lage ist, eine Person ernsthaft zu verletzen.

In der WO 2012/042470 A1 wird eine Sicherheitsvorrichtung für einen Roboter beschrieben, welche die Roboterbewegungen diversitär mit Encodern und Inertialsensoren überwacht. Damit wird sichergestellt, dass bei dem Roboter Plan und Wirklichkeit hinsichtlich seiner Bewegungen übereinstimmt. Dazu müssen sämtliche Achsen doppelt vermessen und berücksichtigt werden, was einen hohen Aufwand bedeutet. Außerdem sind derartige Roboter mit eigener diversitärer Sensorik tatsächlich nicht auf dem Markt verfügbar, und zumindest wäre die Auswahl auf die wenigen Roboter beschränkt, die eine solche Sensorik besitzen, aber vielleicht aus anderen Gründen für die jeweilige Anwendung nicht in Frage kommen. Mit der Beobachtung der Umgebung des Roboters befasst sich diese Schrift nicht.

Aus der DE 10 2007 007 576 B4 ist ein Verfahren zum Sichern eines Arbeitsraums bekannt, der mit einer 3D-Kamera beobachtet wird, um eine Abweichung von einem Soll-Zustand zu erkennen. In einer Ausführungsform ist vorgesehen, die Achsstellungen des Robotersystems redundant zu erfassen und auszuwerten, um sicherzustellen, dass sich der Roboter wie programmiert bewegt. Das bezieht sich aber nur auf eine Überprüfungsphase, denn wenn jetzt die 3D-Kamera noch Abweichungen feststellt, muss dort der Fehler liegen. Es werden keine sicheren Roboterpositionen im Betrieb erfasst, ausgegeben oder gar der Absicherung zugrunde gelegt. Außerdem werden selbst innerhalb der Überprüfungsphase sichere Positionsdaten nur dadurch gewonnen, dass die üblichen Encoder an den Gelenken durch redundante Sensoren ergänzt werden, und dieser Fall wurde im Vorabsatz schon diskutiert.

In der DE 10 2004 043 514 A1 wird ein Verfahren zum Steuern einer sicherheitsrelevanten Funktion einer Maschine beschrieben, das auf der Erfassung einer über der Maschine montierten Kamera basiert. Dabei wird ein die Maschine umgebender Gefahrenbereich dynamisch an die Bewegungen der Maschine und einer in der Nähe erfassten Person angepasst. Die Anforderungen an eine Bildauswertung, mit der aus extern aufgenommenen Kamerabildern die Bewegungen eines Roboterarms auf sichere Weise erfasst werden, sind immens, und die Ergebnisse sind dennoch nicht verlässlich genug, um wirklich minimale Sicherheitsabstände zwischen Person und Roboterarm aufgrund derart erfasster Bewegungen zuzulassen.

In der US 8 989 897 B2 wird ein kinematisches Modell eines Roboters durch verschiedene auf dem Roboter montierte Sensoren kalibriert. Das sorgt dafür, dass der Roboter sein internes, lokales Koordinatensystem mit der Außenwelt abgeglichen hat. Das kinematische Modell selbst hängt mit den für die Kalibrierung benutzten Sensoren nicht zusammen, und die US 8 989 897 B2 trägt zu keiner Verbesserung einer Absicherung des Roboters bei.

In der US 8 786 680 B2 werden für ein Motion Capturing Kameras an Gliedmaßen einer Person befestigt. Die Kameras beobachten die Umgebung während der Bewegungen der Person, und mit Structure-From-Motion-Verfahren wird aus den Kamerabildern die Bewegung der Person rekonstruiert. Das hat aber keinerlei Zusammenhang mit Sicherheitstechnik und Personenschutz, nicht einmal ganz allgemein mit Maschinen oder Robotern .

Die US 2015/0248916 A1 offenbart ein Verfahren zur Nachbearbeitung von Videofilmen. Ausgangspunkt ist ein Videofilm, der beispielsweise mit einer Helmkamera (Action Cam) aufgenommen wurde. In einem ersten Schritt werden aus den Bilddaten die jeweiligen Posen der Kamera rekonstruiert, und dies wird zu einer Bewegungsbahn zusammengesetzt. Diese Bewegungsbahn wird anschließend geglättet, da die Kamera typischerweise eine erratische Bewegung mit zahlreichen Stößen und Rucklern vollzieht. Schließlich wird ein Zeitrafferfilm längs der geglätteten Bewegungsbahn erstellt, in dem die einzelnen Frames aus mehreren Bildern des Ausgangsfilms zusammengesetzt sind. Ersichtlich dient dieses Verfahren einem gänzlich anderen Zweck als der Sicherheitstechnik, und ein Zeitrafferfilm ist auch kein geeignetes Werkzeug, um normgerecht Sicherheitsabstände zu überwachen.

Die WO 2005/115700 A1 offenbart ein Verfahren zur robotergestützten Vermessung von Messobjekten. Dabei wird eine mit Markierungen versehene Kamera an einem Roboterflansch befestigt. Diese Kamera vermisst das Objekt, während sie sich auf einer robotergeführten Bahn bewegt. Um die Bahn anfangs zu gewinnen, wird die mitbewegte Kamera während der Bewegung des Roboterflansches von weiteren, extern angebrachten Kameras beobachtet, die anhand der Markierungen die jeweilige Position und Orientierung bestimmen. Die externen Kameras werden nach dieser Initialisierungsphase abgebaut. Um nun im Betrieb festzustellen, ob die Bahn von der Robotersteuerung und dem Roboter noch präzise reproduziert wird, vermisst die mitbewegte Kamera regelmäßig einen Referenzkörper und prüft, ob dabei noch dieselbe Punktwolke erhalten wird wie bei einer ursprünglichen Vermessung.

In der US 5 083 073 werden eine Kamera und ein Lichtprojektor zu dessen bildgeführter Steuerung an einem Roboterarm angebracht. Um Unterschiede zwischen einer angesteuerten und tatsächlichen Roboterposition kompensieren zu können, wird ein treppenartiges Referenzobjekt vermessen und so ein jeweiliger Korrekturwert bestimmt.

Es ist daher Aufgabe der Erfindung, die Positionserfassung einer beweglichen Maschine zu verbessern.

Diese Aufgabe wird durch ein Sicherheitssystem und ein Verfahren zum Überwachen einer Maschine nach Anspruch 1 beziehungsweise 11 gelöst. Mindestens ein Positionssensor bestimmt eine Pose mindestens eines beweglichen Maschinenteils. Der Positionssensor ist vorzugsweise ein maschineneigener Sensor, beispielsweise darin integriert, und für sich betrachtet nicht sicher im einleitend diskutierten Sinn. Das bewegliche Maschinenteil ist vorzugsweise relativ zur übrigen Maschine beweglich, wie ein Teil eines Roboterarms, nicht die Maschine als Ganzes, wobei eine solche überlagernde Bewegung zusätzlich erlaubt ist. Eine Pose umfasst eine Position und Orientierung in bis zu sechs Freiheitsgraden, die aber nicht zwingend alle erfasst werden, sondern möglicherweise nur die drei Freiheitsgrade der Position oder auch nur zwei Freiheitsgrade einer auf den Boden projizierten Position.

Eine Maschinensteuerung bestimmt aus der mit dem Positionssensor gemessenen Abfolge von Posen eine Bewegungsbahn des beweglichen Maschinenteils. In der allgemeinsten Form umfasst eine Bewegungsbahn die Variablen Position, Geschwindigkeit und Beschleunigung in sechs Freiheitsgraden während des Überwachungszeitraums. Es genügt aber je nach Anwendung, nur einen Abschnitt der Bewegungsbahn, nur einen Teil der Variablen und/oder nur einen Teil der Freiheitsgrade zu betrachten. Eine Steuer- und Auswertungseinheit, vorzugsweise Sicherheitssteuerung, steht in Kommunikationsverbindung mit der Maschinensteuerung, und hat so Zugriff auf die Bewegungsbahn des beweglichen Maschinenteils.

Die Erfindung geht von dem Grundgedanken aus, die mittels Positionssensor gewonnene Bewegungsbahn des beweglichen Maschinenteils mit einer mitbewegten Kamera zu überprüfen. Durch Bildauswertung einer Bildsequenz der Umgebung aus der Ego-Perspektive wird die Bewegungsbahn des beweglichen Maschinenteils rekonstruiert. Dazu werden beispielsweise Korrespondenzen von Bildmerkmalen in verschiedenen Frames der Bildsequenz gesucht, um die jeweilige Position der Kamera zu berechnen, deren zeitliche Aneinanderreihung gerade die gesuchte Bewegungsbahn ist. Es kann auch eine Pose in sechs Freiheitsgraden mit Position und Orientierung bestimmt werden, d.h. wo sich die Kamera zum jeweiligen Aufnahmezeitpunk befindet und wie sie orientiert ist. Den Zeitbezug bildet die Framerate, oder die Bilder der Bildsequenz werden mit einem Zeitstempel versehen, falls die Framerate nicht ausreichend gleichmäßig ist.

Die Steuer- und Auswertungseinheit vergleicht nun zumindest abschnittsweise die aus den Messdaten des Positionssensors gewonnene Bewegungsbahn des beweglichen Maschinenteils mit der von der Bildauswertung rekonstruierten Bewegungsbahn der Kamera. Je nach Sicherheitsanforderungen kann dies eine echt zweikanalige Messung der Bewegungsbahn mit ständigem Vergleich oder eine zyklische Plausibilitätsprüfung sein. Es ist auch denkbar, die gegenseitige Überprüfung auf kritische oder potentiell gefährliche Abschnitte der Maschinenbewegung zu beschränken.

Die Erfindung hat den Vorteil, dass eine sichere Bestimmung der Position und Bewegung einer Maschine ermöglicht wird, die den jeweiligen normierten Anforderungen an ein Sicherheitsniveau genügt. Dabei sind sowohl hohe Sicherheitsanforderungen mit zweitem, redundantem Messkanal als auch etwas geringere Sicherheitsanforderungen mit regelmäßiger Plausibilitätsprüfung möglich. Es ist nicht erforderlich, etwas an der Maschine selbst zu verändern, wie dies bei Integration redundanter Positionssensorik in die Maschine der Fall wäre. Dadurch bleibt die Erfindung unabhängig von bestimmten Datenschnittstellen, Maschinen oder Herstellern. Sie kann für Roboter mit nicht sicherer Positionsbestimmung ebenso eingesetzt werden wie für die einleitend beschriebenen Roboter mit einer gewissen, aber nicht hinreichenden Sicherheit in Form von Sicherheitsvolumina oder -korridoren.

Die Erfindung ist auch äußerst einfach anzuwenden, sie bedarf keines Expertenwissens. Die mögliche Komplexität der Bildauswertungsverfahren ist für den Anwender nicht von Belang, und außerdem sind viele Techniken aus anderen Zusammenhängen schon vorhanden. Es wird keine teure Ausrüstung gefordert, sondern lediglich eine Kamera mit zugehöriger Software. Die Kamera kann nach Belieben an jedem relevanten beweglichen Maschinenteil angebracht werden, so dass das Verfahren kostengünstig und äußerst flexibel ist. Da viele kommerzielle Kameras zumindest eine gewisse Robustheit und Wasserfestigkeit aufweisen, sind auch Anwendungen im Freien oder gar unter Wasser möglich, soweit die Maschine selbst das zulässt.

Das bewegliche Maschinenteil ist bevorzugt über ein Gelenk mit der Maschine verbunden, wobei der Positionssensor die Gelenkstellung bestimmt. Ein typisches Beispiel ist ein Roboterarm. Der Positionssensor bestimmt über dessen Pose über die Gelenkstellung. Bei einem mehrgliedrigen Maschinenteil werden die Gelenke einzeln überwacht, und die Pose wird aus den verschiedenen Gelenkstellungen bestimmt.

Der Positionssensor ist bevorzugt ein induktiver, kapazitiver oder magnetischer Sensor oder ein Encoder. Der Positionssensor ist damit insbesondere kein optischer Sensor, der eigenes oder fremdes Licht aus der Umgebung empfängt und auswertet. Ein optischer Encoder ist kein solcher optischer Sensor, da dessen Licht nicht mit der Umgebung in Wechselwirkung tritt, sondern lediglich im Encoder Codescheiben an- oder durchleuchtet.

Die Kamera ist nachträglich und/oder lösbar an der Maschine angebracht. Im Gegensatz zum Positionssensor gehört die Kamera damit nicht eigentlich zu der Maschine. Sie ist vielmehr nachrüstbar, indem sie geeignet an dem Maschinenteil befestigt wird, und kann in nicht sicherheitskritischen Anwendungen ohne Nähe zu Personen oder bei alternativen Absicherungskonzepten auch entfernt werden. Alternativ ist die Kamera doch ein Teil der Maschine, aber dazu muss die Maschine recht grundlegend umgebaut werden, und das bleibt dann wieder nur dem Maschinenhersteller vorbehalten.

Die Bildauswertungseinheit ist bevorzugt für die Bestimmung der Bewegungsbahn der Kamera unter Verwendung eines Structure-from-Motion-Verfahrens ausgebildet. Solche Verfahren sind an sich bekannt, und das Grundkonzept ähnelt der Stereoskopie: Es werden in Bildern aus verschiedener Perspektive Korrespondenzen gesucht, also übereinstimmende Bildmerkmale. Im Falle von Structure-from-Motion hat die unterschiedliche Perspektive ihre Ursache in der Bewegung der Kamera. Aus dem Unterschied in der Lage der Bildmerkmale in dem jeweiligen Bild wird auf die Entfernung des zu dem Bildmerkmal gehörigen Merkmals der Szene geschlossen. In der Stereoskopie sind solche dreidimensionalen Bilddaten das Ziel der Auswertung. Beim hier verwendeten Structure-from-Motion-Ansatz wird umgekehrt auf die jeweilige Position der Kamera geschlossen, um deren Bewegung zu rekonstruieren. Später werden einige Beispiele bekannter Algorithmen für Structure-from-Motion genannt.

Die Bewegung wird vorzugsweise geglättet. Damit ist die erfasste Bewegung gemeint, also die Daten, nicht die tatsächliche Bewegung, die in der Verantwortung der Maschinensteuerung liegt und nur beobachtet wird. Da sich die Kamera mit der Maschine bewegt, ist sie Erschütterungen und dergleichen ausgesetzt. Auf solchen Einzelereignissen soll die Sicherheitsbetrachtung nicht beruhen. Eine Möglichkeit, die Bewegung zu glätten, wird bei der Pfadplanung in der einleitend genannten US 2015/0248916 A1 beschrieben. Sie dient dort der Erzeugung von Zeitrafferfilmen, kann aber auch für die Erfindung verwendet werden. Sofern zum Glätten Frames entfallen müssen, wird der Zeitbezug vorzugsweise reskaliert. Weitere Möglichkeiten könnten das Errechnen dreidimensionaler gleitender Durchschnitte oder Interpolationen insbesondere mit Splines sein.

Die Steuer- und Auswertungseinheit ist bevorzugt dafür ausgebildet, für den Vergleich ein statistisches Maß der Bewegungsbahn des beweglichen Maschinenteils und/oder der Bewegungsbahn der Kamera zu bestimmen. Dazu werden beispielsweise Stichproben beziehungsweise nur jeder n-te Datenpunkt zum Vergleich herangezogen. Ziel ist, die statistischen Messunsicherheiten zu quantifizieren und auf ebenso verlässliche wie handhabbare Weise eine Aussage darüber zu treffen, ob sich Positionssensor und Kamera über die Bewegungsbahn einig sind.

Die Steuer- und Auswertungseinheit ist bevorzugt dafür ausgebildet, einen konstanten Versatz zwischen der Bewegungsbahn des beweglichen Maschinenteils und der Bewegungsbahn der Kamera zu bestimmen. Ein derartiger Versatz wird je nach Montageposition der Kamera und Bezugssystem des Positionssensors auftreten. Das kann aber berücksichtigt werden, indem die beiden Bewegungsbahnen möglichst gut übereinandergelegt werden, um den Versatz zu bestimmen. Das Problem, die beiden Bewegungsbahnen in Übereinstimmung zu bringen, ist verwandt mit dem Vergleich im Betrieb, so dass auch ähnliche Methoden anwendbar sind. Allerdings wird der Versatz vorzugsweise vor dem Regelbetrieb etwa als Kalibrationsschritt im Rahmen des Einrichtens bestimmt.

Die Kamera ist bevorzugt an oder in der Nähe von einem gefahrbringenden Maschinenteil angebracht, wie etwa einer Werkzeugspitze. Damit wird die Flexibilität genutzt, die Kamera überall anbringen zu können. Wenn es sich beispielsweise um einen Roboter mit vielen Achsen handelt, ist für die Kamera deren Zusammenspiel nicht relevant, da sie einfach die resultierende Bewegung am Ort der Gefahr bestimmt.

Vorzugsweise sind mehrere Kameras an der Maschine angebracht, um die Bewegung von mehreren beweglichen Maschinenteilen zu bestimmen. Damit lassen sich auch komplexe Maschinen überwachen, bei denen eine punktuelle Bestimmung der Bewegung nicht ausreicht. Ein Beispiel ist ein Roboter mit mehreren Roboterarmen und eventuell Gelenken.

Das Sicherheitssystem weist vorzugsweise mindestens einen externen Sensor zur Erfassung von Objekten in einer Umgebung der Maschine auf, wobei die Steuer- und Auswertungseinheit dafür ausgebildet ist, die Maschine anhand der erfassten Objekte und der Bewegungsbahn des Maschinenteils abzusichern. Der externe Sensor ist nicht an der Maschine, sondern in gewissem Abstand montiert, beispielsweise vor oder über der Maschine. Absichern bedeutet, dass die Maschine bei drohender Gefahr für eine Person in deren Nähe in einen sicheren Zustand gebracht wird, wie dies typischerweise in einer Sicherheitsanwendung geschieht, wenn eine gefährliche Situation zwischen Objekt und Maschine erkannt wird, sie hält also beispielsweise an, wird auf eine geringere Geschwindigkeit abgebremst oder weicht aus. Da erfindungsgemäß auf sichere Weise erfasst ist, wo sich das bewegliche Maschinenteil befindet, können Sicherheitsabstände mittels Speed-and-Separation-Monitoring ohne unnötige Zuschläge überwacht werden. Es ist also eine besonders enge Kooperation von Mensch und Maschine ermöglicht.

Als externer Sensor wird bevorzugt ein an sich bekannter, für die Sicherheitstechnik geeigneter Sensor eingesetzt, etwa ein Laserscanner, ein Lichtgitter, ein Ultraschallsensor oder eine Trittmatte. Vorzugsweise handelt es sich um eine externe Kamera, insbesondere eine 3D-Kamera. Lokale Koordinaten der Bewegung der Maschine werden dann bevorzugt anhand gemeinsam erkannter Bildmerkmale der an der Maschine angebrachten Kamera und der externen Kamera in globale Koordinaten der äußeren Perspektive umgerechnet oder umgekehrt. Die mitbewegte Kamera bestimmt die Bewegung zunächst nur in ihren eigenen lokalen Koordinaten, beziehungsweise nach entsprechender Kalibrierung zur Maschine in den lokalen Koordinaten der Maschinensteuerung, die auch der Positionssensor vorzugsweise verwendet. Eine Möglichkeit der Umrechnung in ein externes oder globales Koordinatensystem ist eine Kalibration. Die Transformation lässt sich aber anhand von Bildmerkmalen, welche von der mitbewegten Kamera und der externen Kamera gleichermaßen erfasst werden, auch automatisieren.

Die externe Kamera und die an der Maschine angebrachte Kamera können einander für Objekterkennung und/oder Bestimmung der Bewegung ergänzen, etwa indem die aus der mitbewegten Kamera bestimmte Bewegungsbahn durch die Bildsequenz der externen Kamera plausibilisiert wird. Die mitbewegte Kamera beobachtet die Umgebung ohnehin und kann deshalb in einer Doppelfunktion auch für eine Objekterfassung zuständig sein. Sie ersetzt oder ergänzt dann Sicherheitssensoren für die sicherheitstechnische Überwachung der Maschine. Eine solche Kamera ist bevorzugt eine Sicherheitskamera mit entsprechenden Maßnahmen zur Einhaltung einschlägiger Sicherheitsnormen. Alternativ ist die Kamera nur eine von mehreren Quellen zu Erfassung von Objekten, dann kann die Sicherheit auch erst durch die Kombination gewährleistet sein, und die Kamera braucht in sich nicht sicher ausgelegt zu werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Ansicht eines Roboters mit einer daran angebrachten Kamera zum Bestimmen der Eigenbewegung des Roboters;
- Fig. 2: eine beispielhafte Darstellung einer Bewegungsbahn einer Kamera und eine zugehörige geglättete Bewegungsbahn; und
- Fig. 3: eine schematische Ansicht eines Roboters ähnlich Figur 1, jedoch mit zusätzlicher externer Kamera zur Überwachung des Roboters.

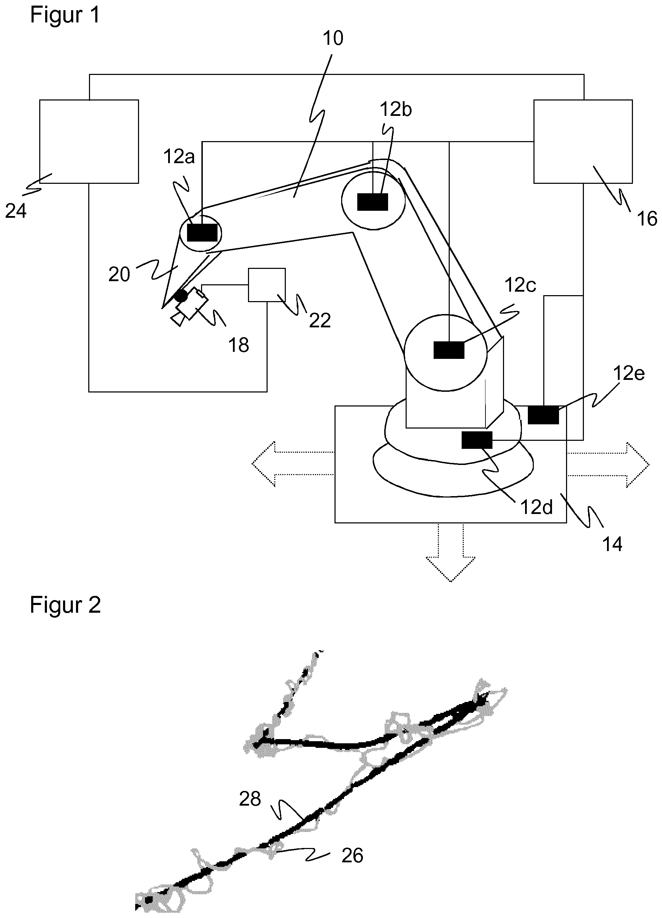

Figur 1 zeigt eine schematische Ansicht eines Roboters 10. Der Roboter 10 dient als Beispiel eines gefahrbringenden Objekts, aber andere sicherheitstechnisch zu überwachende Maschinen wie Förderer, Pressen und auch Fahrzeuge sind ebenso denkbar, insbesondere Gabelstapler oder autonome Fahrzeuge (AGC, Automated Guided Cart oder AGV, Automated Guided Vehicle).

Der Roboter 10 weist eine Vielzahl von Gelenken auf, und deren Stellung und damit die Pose des Roboters 10 wird durch Positionssensoren 12a-d überwacht. Der Roboter 10 kann als Ganzes stationär oder beispielsweise mit Hilfe einer Mobilplattform 14 beweglich sein, wie durch Richtungspfeile angedeutet, wobei eine derartige Gesamtbewegung ebenfalls durch einen Positionssensor 12e erfasst wird.

Die Positionssensoren 12a-e sind mit einer Robotersteuerung 16 verbunden, die anders als dargestellt auch in den Roboter 10 integriert sein kann. Die Robotersteuerung 16 ist zum einen für sämtliche Bewegungen und Abläufe des Roboters 10 zuständig, worauf hier nicht näher eingegangen wird. Außerdem empfängt sie die Sensordaten der Positionssensoren 12a-e, um daraus die jeweilige Pose des Roboters 10 und aus deren zeitlicher Abfolge dessen Bewegungsbahn zu bestimmen. Diese Funktionalität kann zumindest teilweise schon in den Positionssensoren 12a-e implementiert sein.

An dem Roboter 10, genauer an einem beweglichen Maschinenteil 20 des Roboters 10, ist zudem eine Kamera 18 angebracht. Hier ist das bewegliche Maschinenteil 20 eine Arm- oder Werkzeugspitze, die zugleich die wesentliche Gefahrenquelle bildet. Die Kamera 18 beobachtet die Umgebung des Roboters 10 aus ihrer Ego-Perspektive, und eine Bildauswertung 22 rekonstruiert aus den dabei aufgenommenen Bildsequenzen die Eigenbewegung der Kamera 18 und damit die Bewegung des beweglichen Maschinenteils 20. Das wird später unter Bezugnahme auf die Figur 2 noch genauer erläutert.

Eine Besonderheit eines Roboters 10 ist, dass das bewegliche Maschinenteil 20 eine komplexe Bewegung aus der Überlagerung mehrerer Bewegungen vollzieht. Die mitbewegte Kamera 18 kann an jeder relevanten Position angebracht werden, vorzugsweise nahe der eigentlichen Gefahrenquelle, und diese komplexe Überlagerung ohne besonderen Mehraufwand berücksichtigen, da es für die Kamera 18 keine Rolle spielt, wie es im Einzelnen zu ihrer Eigenbewegung kommt. Derartige überlagerte Bewegungen gibt es aber zumindest mit reduzierter Komplexität auch bei anderen Maschinen als dem Roboter 10.

Mittels der Positionssensoren 12a-e und der Kamera 18 wird die Pose und im zeitlichen Ablauf die Bewegung des beweglichen Maschinenteils 20 zweifach auf völlig unterschiedliche Weise bestimmt. Diese diversitäre Redundanz wird erfindungsgemäß für eine sichere Bewegungs- beziehungsweise Positionsüberwachung ausgenutzt.

Die Positionssensoren 12a-e sind selbst vorzugsweise keine sicheren Sensoren im Sinne der einleitend genannten Normen, so dass auch die Bewegungsbahn des Roboters 10 auf diese Weise nicht sicher bestimmt ist. Das gleiche gilt für die Kamera 18, die vorzugsweise keine sichere Kamera ist. Es ist aber andererseits auch nicht ausgeschlossen, jeweils sichere Sensorik einzusetzen, wenn der zusätzliche Aufwand in Kauf genommen wird.

Eine Steuer- und Auswertungseinheit 24, vorzugsweise eine Sicherheitssteuerung, ist sowohl mit der Robotersteuerung 16 als auch der Bildauswertung 22 verbunden. Sie hat dadurch Zugriff auf die diversitär bestimmten Bewegungsbahnen von beweglichem Maschinenteil 20 und Kamera 18, die aufgrund der mitbewegten Anbringung der Kamera 18 bis auf einen möglichen konstanten Versatz übereinstimmen. Die Steuer- und Auswertungseinheit 24 prüft nun, ob die beiden unabhängig voneinander gemessenen Bewegungsbahnen übereinstimmen. Folglich ermöglicht die Kamera 18 eine Überprüfung der von dem Roboter 10 beziehungsweise dessen Robotersteuerung 16 mit Hilfe der Positionssensoren 12a-e bestimmten Positionen und Bewegungen. Dies kann je nach angestrebtem Sicherheitsniveau eine echt zweikanalige Messung mit ständiger gegenseitiger Überprüfung oder eine zyklische Plausibilitätsprüfung sein. Mit Hilfe der Kamera 18 entsteht somit ein sicheres Überwachungssystem, sei es als ein zweikanaliges System oder als ein einkanaliges Sicherheitssystem mit Diagnose.

Die Bildauswertung 22 ist vorzugsweise echtzeitfähig, wobei sich das an den geforderten Ansprechzeiten bemisst. Eine Zeitverzögerung kann toleriert werden, soweit die Ausfallwahrscheinlichkeit währenddessen klein genug bleibt oder ein Ausfall erst mit gewisser Ansprechzeit sicherheitskritisch wird. Das muss im Rahmen der Sicherheitsbetrachtung festgelegt werden, aber eine verzögerte Fehleraufdeckung nach mehreren Sekunden oder sogar mehreren zehn Sekunden ist in vielen Fällen noch ausreichend.

Die in Figur 1 gezeigte klare Aufteilung der Auswertungsfunktionalität in eine Robotersteuerung 16, eine Bildauswertung 22 und eine übergeordnete Steuer- und Auswertungseinheit 24 dient vor allem der übersichtlichen Erläuterung, es sind auch andere Aufteilungen über mehr oder weniger Hardwaremodule denkbar. Die Robotersteuerung 16 ist auch in praktischen Anwendungsfällen vorzugsweise separiert und nur über ihre vom Hersteller spezifizierten Schnittstellen ansprechbar. Die Bildauswertung 22 jedoch kann wahlweise wie dargestellt als eigenes Hardwaremodul, alternativ in der Kamera 18 oder der Steuer- und Auswertungseinheit 24 oder auch darüber verteilt implementiert sein. Die Verbindungen können jeweils drahtlos oder drahtgebunden sowie direkt oder indirekt beispielsweise durch eine übergeordnete Steuerung, wie eine Roboterzellensteuerung, realisiert sein.

Unter Bezugnahme auf Figur 2 wird nun erläutert, wie die Bildauswertung 22 die Eigenbewegung beziehungsweise die Bewegungsbahn der Kamera 18 aus einer Bildsequenz bestimmt. Dabei zeigt Figur 2 ein Beispiel einer ursprünglich berechneten Bewegungsbahn 26 in grau und eine geglättete Bewegungsbahn 28 in schwarz. Das Ziel ist ganz allgemein die Rekonstruktion der Bewegungsbahn r(t) = (x(t), y(t), z(t)) der Kamera 18. Die Bewegungsbahn kann um die jeweilige Orientierung erweitert werden und enthält dann bis zu sechs Parameter. Über die Ableitungen der Bewegungsbahn sind auch Geschwindigkeiten und Beschleunigungen bestimmt. Die Bewegungsbahn muss aber nicht zwingend für alle Zeiten oder in allen Dimensionen bestimmt sein, je nach Anforderung genügt ein Teil dieser Informationen.

Da die Kamera 18 mit dem Roboter 10 mitbewegt ist, nimmt sie Bildsequenzen aus einer Ego-Perspektive (first-person) auf. Es ist vorteilhaft, die Kamera 18 vorab zu kalibrieren. Die Bildauswertung 22 bestimmt die jeweilige Kameraposition in lokalen Koordinaten mit Structure-from-Motion-Bildauswertungen (SFM) aus der Bildsequenz. Solche Bildauswertungen sind an sich bekannt und beruhen darauf, übereinstimmende Bildmerkmale oder Korrespondenzen in zu unterschiedlichen Zeitpunkten aufgenommenen Bildern zu finden beziehungsweise Bildmerkmale über die Bildsequenz zu verfolgen (Tracking). Aufgrund der Bewegung wechselt zwischen den Bildern ständig die Kameraperspektive. Aus der relativen Lage der übereinstimmenden Bildmerkmale in den Bildern kann die jeweilige Kameraposition zurückgerechnet werden.

Ein bewährter Algorithmus zur Erkennung von übereinstimmenden Bildmerkmalen ist SIFT (Scale Invariant Feature Transform). Dabei wird zunächst zur Aufschärfung von Bildmerkmalen die DOG-Funktion (Difference-of-Gaussian) auf die Bilder angewandt, um Kandidaten für Bildmerkmale als deren Extrema zu erkennen. Eine andere verbreitete Bildmerkmalserkennung ist als SURF (Speed Up Robust Features) bekannt, wo die DOG-Funktion durch einen auf einer Hesse-Matrix basierenden Blob-Detektor ersetzt ist. Der Lukas-Kanade-Tracker ist ein Matching-Algorithmus, um Bildmerkmale von Bild zu Bild zu verfolgen. Es kann vorkommen, dass einige Bildmerkmale fehlerhaft als korrespondierend erkannt werden. Deshalb sind Filter vorteilhaft, um die Korrespondenzen zu überprüfen. Ausreißer werden dabei beispielsweise mit einem RANSAC-Verfahren (Random Sample Consensus) eliminiert.

Es gibt verschiedene Ansätze, um die Kamerapose aus den Korrespondenzen zu rekonstruieren. Bei inkrementeller SFM wird Bild für Bild eine Kamerapose berechnet, und die Kameraposen werden aneinandergereiht. Bei globaler SFM hingegen wird das Problem für alle Kameraposen gleichzeitig gelöst. Als Zwischenlösung gibt es sogenannte out-ofcore-SFM, wo mehrere partielle Rekonstruktionen berechnet und dann zu einer globalen Lösung zusammengesetzt werden.

Somit ist durch SFM-Techniken die Abfolge der Kamerapositionen und damit die Bewegungsbahn r(t) = (x(t), y(t), z(t)) der Kamera 18 bestimmbar, wobei der Zeitbezug aus der Framerate oder aus Zeitstempeln der jeweiligen Bilder gewonnen wird. Obwohl die vollständige zeitabhängige Bewegungsbahn zugänglich ist, sind Ausführungsformen vorstellbar, in denen nur ein Teil dieser Informationen gewonnen beziehungsweise weiterverwendet wird.

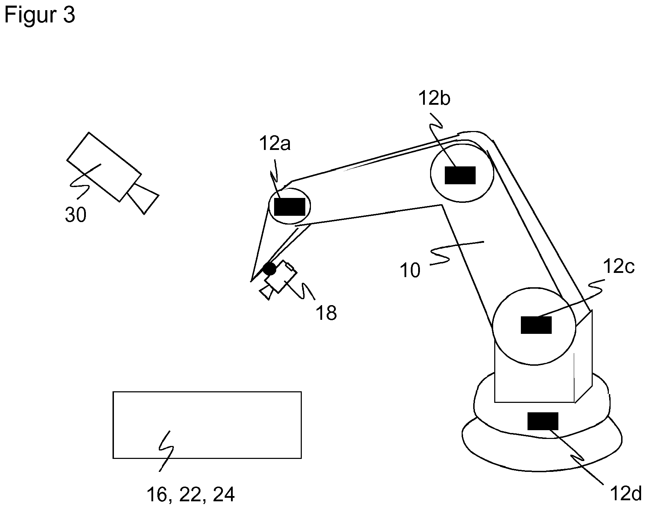

Die Bewegungsbahn der Kamera 18 kann anschließend noch geglättet werden, da sie möglicherweise aufgrund von Erschütterungen und anderen Störungen von einer ideal gemessenen Bewegungsbahn des Roboters 10 noch abweicht. Figur 3 illustriert dies an einem Beispiel der mittels SFM-Verfahren berechneten ursprünglichen Bewegungsbahn 26 in grau und der geglätteten Bewegungsbahn 28 in schwarz. Die Glättung kann durch eine Mittelung erfolgen. Vorzugsweise werden aber anspruchsvollere Techniken verwendet, die eigentlich für die Erzeugung von ruckfreien Zeitraffervideos entwickelt wurden. Für eine genaue Erläuterung dieses Glättungsverfahrens verweisen wir auf die einleitend kurz diskutierte US 2015/0248916 A1.

Die Bewegungsbahn der Kamera 18 hat möglicherweise noch einen festen Versatz zu dem beweglichen Maschinenteil 20, insbesondere zur Werkzeugspitze selbst. Sie ist zunächst in lokalen Koordinaten der Kamera 18 bestimmt. Dieser Versatz in Position und/oder Orientierung beziehungsweise die Koordinatentransformation lässt sich aber vorab bestimmen und dann kompensieren, indem die beiden mittels Positionssensoren 12a-e und mittels Kamera 18 bestimmten Bewegungsbahnen aufeinander gefittet werden, etwa durch ein Verfahren der kleinsten Fehlerquadrate. Es ist natürlich auch möglich, die Kamera 18 auf andere Weise bezüglich des Roboters 10 zu kalibrieren, etwa durch Ausmessen ihrer Position und Orientierung.

Auch im Betrieb stehen diverse Verfahren zur Verfügung, um die beiden Bewegungsbahnen zu vergleichen. Das sollte vorzugsweise nicht punktweise geschehen, schon weil die Messpunkte höchstwahrscheinlich in unterschiedlicher Diskretisierung erfasst werden, und vor allem weil dies die Messunsicherheiten nicht ausreichend berücksichtigt. Es ist möglich, wiederum mit Funktionsfit Abschnitte der Bewegungsbahnen aufeinander abzubilden und nur einen spezifizierten größten Fehler zuzulassen. Außerdem können Stichproben von Messdaten genommen werden, etwa jeder n-te Datenpunkt der Bewegungsbahnen, und daraus statistische Maße gewonnen werden, welche die Messunsicherheit quantifizieren, um damit einen Rahmen für eine geforderte Übereinstimmung zu gewinnen. Ein weiterer Ansatz sind dreidimensionale gleitende Durchschnitte der Messdaten. Statische Verfahren, um die zweifach gemessenen Bewegungsbahnen auf eine geforderte Übereinstimmung zu prüfen, sind an sich bekannt und können auf beide Bewegungsbahnen angewandt werden, also die von der Bildauswertung 22 bestimmte Bewegungsbahn und/oder diejenige, welche der Roboter 10 mittels der Positionssensoren 12a-e liefert.

Als Kamera 18 kann eine beliebige herkömmliche 2D-Kamera eingesetzt werden, insbesondere eine kleine und robuste Kamera (Action Cam). Alternativ wird eine 3D-Kamera eingesetzt, insbesondere eine Lichtlaufzeitkamera (TOF, Time of Flight). Es ist denkbar, eine aktive Beleuchtung für die Kamera 18 vorzusehen, bei einigen Verfahren wie Lichtlaufzeitverfahren oder 3D-Triangulation aus einem strukturierten Muster ist das sogar erforderlich. In der Szenerie können zusätzliche Marker angebracht werden, welche die Bewegungsrekonstruktion als zuverlässig erkennbare Korrespondenzen verbessern. Zusätzliche Maßnahmen zur Qualitätsverbesserung der Messung sind möglich, wie Bandpassfilter, insbesondere auf eine eigene aktive Beleuchtung abgestimmt, Filter für Bewegungsunschärfe, kurze Belichtungszeiten, hohe Aufnahmefrequenzen und dergleichen.

Die Kamera 18 kann sehr einfach an jedem interessierenden beweglichen Maschinenteil angebracht werden, wie Gelenken, exponierten Punkten, dem vordersten Teil eines Fahrzeugs. Es ist unerheblich, wie komplex sich beispielsweise eine Roboterbewegung am Ort der Kamera 18 aus verschiedenen Achsen zusammensetzt, da die Kamera 18 in jedem Fall die resultierende Bewegung erfährt.

Durch Anbringen mehrerer Kameras 18 an verschiedenen Maschinenteilen werden entsprechende Bewegungsbahnen aus deren jeweiliger Perspektive gewonnen. Besonders geeignet ist das Anbringen einer oder mehrere Kameras 18 für ein Kugelmodell des Roboters 10, wo die Kamera die Bewegungsbahn der jeweiligen Kugel bestimmt. Mit Hilfe von Koordinatentransformationen kann das Modell auf ein von dem Roboter 10 gehaltenes Werkzeug oder ein transportiertes Werkstück ausgedehnt werden.

Aus den Bewegungsbahnen ri(t) für die i=1...n Kameras 18 lassen sich in Kenntnis oder nach Messung der bewegten Massen auch weitere physikalische Größen wie der Impuls, die kinetische Energie oder auch die Kraft beziehungsweise der Kraftübertrag bei einer Kollision ableiten. In einigen Sicherheitsanwendungen sind unschädliche Berührungen erlaubt, beispielsweise bei Kleinrobotern in einer Mensch-Maschine-Kooperation (MRK). Dort kann anhand solcher Größen bestimmt werden, welche Berührungen noch zugelassen werden beziehungsweise direkt gemessen werden, ob Grenzen noch eingehalten sind.

Zusätzliche Informationen lassen sich nicht nur durch mehrere Kameras 18, sondern auch andere Sensoren gewinnen. So können die kinetischen Größen diversitär geprüft oder verbessert werden. Einige Beispiele sind Drehgeber oder Trägheitssensoren, wie Beschleunigungs- oder Drehratensensoren. Mit letzteren, die an dem beweglichen Maschinenteil 20 oder der Kamera 18 angeordnet werden, wird die Beschleunigung als zweite Ableitung der Bewegungsbahn r(t) unabhängig gemessen. Das ist eine zusätzliche Messinformation zur Überprüfung der vom Roboter 10 mittels der Positionssensoren 12a-e selbst gemessenen Bewegungsbahn, welche die Kamera 18 ergänzt oder sogar ersetzen kann.

Figur 3 zeigt eine typische sicherheitstechnische Anwendungssituation, in der die sicher erfasste Bewegungsbahn des Roboters 10 für eine Absicherung mittels einer externen Kamera 30 verwendet wird, welche Objekte in einer Umgebung des Roboters 10 erfasst. Anstelle einer Kamera 30 oder im Zusammenspiel damit können auch andere Sensoren die Objekte detektieren.

Die diversen Auswertungsfunktionen sind in Figur 3 vereinfacht als ein einziger schematischer Kasten darstellt. Das soll auch noch einmal die Möglichkeit unterstreichen, diese Funktionen je nach Ausführungsform auf verschiedene Hardwarebausteine zu verteilen. Eine weitere Möglichkeit ist, zumindest einen Teil der erforderlichen Rechenoperationen in einem Netzwerk beziehungsweise einer Cloud mit entsprechend geringer Latenz durchzuführen.

Aufgabe der Kamera 30 beziehungsweise einer angeschlossenen Sicherheitssteuerung ist, bei Erkennen einer Gefahrensituation in Form eines Objekts, das dem Roboter 10 in gefährlicher Weise nahekommt, ein sicherheitsgerichtetes Absicherungssignal an den Roboter 10 auszugeben, woraufhin dieser in einen sicheren Zustand versetzt wird. Dazu wird vorzugsweise ein Ansatz des Speed-and-Separation-Monitorings gewählt. Erfindungsgemäß ist die Bewegungsbahn des Roboters 10 auf sichere Weise bekannt, so dass tatsächlich optimale kleine Sicherheitsabstände ohne unnötige Zuschläge verwendet werden können und damit eine besonders enge Mensch-Maschine-Kooperation ermöglicht wird.

Die Bilddaten der am Roboter 10 mitbewegten Kamera 18 können für die Objektüberwachung mitgenutzt werden, auch wenn deren Hauptfunktion die Bestimmung der Eigenbewegung des Roboters 10 ist. Ein optischer Marker im Sichtfeld der beiden Kameras 18, 30 kann genutzt werden, um eine Umrechnungsvorschrift zwischen den jeweiligen Koordinaten zu gewinnen. Im kompaktesten Fall ist die Kamera 18 selbst eine Sicherheitskamera und übernimmt die Funktion der externen Kamera 30 mit.

## Patentansprüche

1. Sicherheitssystem zum Überwachen einer Maschine (10), insbesondere eines Roboters, mit mindestens einem Positionssensor (12a-e) zur Bestimmung der Pose mindestens eines beweglichen Maschinenteils (20), mit einer Maschinensteuerung (16), die mit dem Positionssensor (12a-e) verbunden ist, um aus dessen Sensordaten eine Bewegungsbahn des beweglichen Maschinenteils (20) zu bestimmen, und mit einer Steuer- und Auswertungseinheit (24), die in Kommunikationsverbindung mit der Maschinensteuerung (16) steht,
**dadurch gekennzeichnet,**
**dass** zum Überprüfen der mittels Positionssensor (12a-e) gewonnenen Bewegungsbahn mindestens eine mitbewegte Kamera (18) an dem beweglichen Maschinenteil (20) angebracht ist, um während dessen Bewegung eine Bildsequenz der Umgebung der Maschine (10) aus der Ego-Perspektive aufzunehmen, dass eine Bildauswertungseinheit (22) vorgesehen ist, um aus der Bildsequenz eine Bewegungsbahn der Kamera (18) zu bestimmen und an die Steuer- und Auswertungseinheit (24) auszugeben, und dass die Steuer- und Auswertungseinheit (24) dafür ausgebildet ist, zumindest einen Abschnitt der Bewegungsbahn des beweglichen Maschinenteils (20) und der Bewegungsbahn der Kamera (18) miteinander zu vergleichen, so dass mittels Positionssensor (12a-e) und Kamera (18) die Bewegungsbahn des beweglichen Maschinenteils (20) diversitär-redundant bestimmt wird und so eine sichere Bewegungsüberwachung erreicht ist.

2. Sicherheitssystem nach Anspruch 1,
wobei das bewegliche Maschinenteil (20) über ein Gelenk mit der Maschine (10) verbunden ist, und wobei der Positionssensor (12a-e) die Gelenkstellung bestimmt.

3. Sicherheitssystem nach Anspruch 1 oder 2,
wobei der Positionssensor (12a-e) ein induktiver, kapazitiver oder magnetischer Sensor oder ein Encoder ist.

4. Sicherheitssystem nach einem der vorhergehenden Ansprüche,
wobei die Kamera (18) nachträglich und/oder lösbar an der Maschine (10) angebracht ist.

5. Sicherheitssystem nach einem der vorhergehenden Ansprüche,
wobei die Bildauswertungseinheit (22) für die Bestimmung der Bewegungsbahn der Kamera (18) unter Verwendung eines Structure-from-Motion-Verfahrens ausgebildet ist.

6. Sicherheitssystem nach einem der vorhergehenden Ansprüche,
wobei die Steuer- und Auswertungseinheit (24) dafür ausgebildet ist, für den Vergleich ein statistisches Maß der Bewegungsbahn des beweglichen Maschinenteils (20) und/oder der Bewegungsbahn der Kamera (18) zu bestimmen.

7. Sicherheitssystem nach einem der vorhergehenden Ansprüche,
wobei die Steuer- und Auswertungseinheit (24) dafür ausgebildet ist, einen konstanten Versatz zwischen der Bewegungsbahn des beweglichen Maschinenteils (20) und der Bewegungsbahn der Kamera (18) zu bestimmen.

8. Sicherheitssystem nach einem der vorhergehenden Ansprüche,
wobei die Kamera (18) an oder in der Nähe von einem gefahrbringenden Maschinenteil (20) angebracht ist.

9. Sicherheitssystem nach einem der vorhergehenden Ansprüche,
wobei mehrere Kameras (18) an der Maschine (10) angebracht sind, um die Bewegung von mehreren beweglichen Maschinenteilen (20) zu bestimmen.

10. Sicherheitssystem nach einem der vorhergehenden Ansprüche,
mit mindestens einem externen Sensor (30) zur Erfassung von Objekten in einer Umgebung der Maschine (10), wobei die Steuer- und Auswertungseinheit (24) dafür ausgebildet ist, die Maschine (10) anhand der erfassten Objekte und der Bewegungsbahn des Maschinenteils (20) abzusichern.

11. Verfahren zum Überwachen einer Maschine (10), insbesondere eines Roboters, bei dem mit mindestens einem Positionssensor (12a-e) eine Bewegungsbahn mindestens eines beweglichen Maschinenteils (20) bestimmt wird,
**dadurch gekennzeichnet,**
**dass** zum Überprüfen der mittels Positionssensor (12a-e) gewonnenen Bewegungsbahn mindestens eine mitbewegte Kamera (18) an dem beweglichen Maschinenteil (20) angebracht wird, die während der Bewegung des beweglichen Maschinenteils (20) eine Bildsequenz der Umgebung der Maschine (10) aus der Ego-Perspektive aufnimmt, dass aus der Bildsequenz eine Bewegungsbahn der Kamera (18) bestimmt wird und dass zur sicheren Erfassung der Bewegung der Maschine (10) zumindest ein Abschnitt der Bewegungsbahn des beweglichen Maschinenteils (20) und der Bewegungsbahn der Kamera (18) miteinander verglichen wird, so dass mittels Positionssensor (12a-e) und Kamera (18) die Bewegungsbahn des beweglichen Maschinenteils (20) diversitär-redundant bestimmt und so eine sichere Bewegungs-überwachung erreicht wird.

## Claims

1. A safety system for monitoring a machine (10), in particular a robot, the safety system comprising at least one position sensor (12a-e) for determining the pose of at least one movable machine part (20), a machine controller (16) which is connected to the position sensor (12a-e) in order to determine a movement path of the movable machine part (20) from the sensor data of the position sensor (12a-e), and a control and evaluation unit (24) which is in communication connection with the machine controller (16),
**characterized in that**, in order to check the movement path obtained by means of the position sensor (12a-e), at least one co-moving camera (18) is attached to the moving machine part (20) in order to acquire an image sequence of the surroundings of the machine (10) from the first-person perspective during its movement, **in that** an image evaluation unit (22) is provided in order to determine a movement path of the camera (18) from the image sequence and to output the movement path to the control and evaluation unit (24), and **in that** the control and evaluation unit (24) is configured to compare at least a section of the movement path of the moving machine part (20) and the movement path of the camera (18) with one another, so that by means of the position sensor (12a-e) and the camera (18) the movement path of the moving machine part (20) is determined with diverse redundancy and thus a safe movement monitoring is achieved.

2. The safety system according to claim 1,
wherein the movable machine part (20) is connected to the machine (10) via a joint, and wherein the position sensor (12a-e) determines the joint position.

3. The safety system according to claim 1 or 2,
wherein the position sensor (12a-e) is an inductive, capacitive or magnetic sensor or an encoder.

4. The safety system according to any of the preceding claims,
wherein the camera (18) is subsequently and/or detachably attached to the machine (10).

5. The safety system according to any of the preceding claims,
wherein the image evaluation unit (22) is configured to determine the path of movement of the camera (18) using a structure-from-motion method.

6. The safety system according to any of the preceding claims,
wherein the control and evaluation unit (24) is configured to determine a statistical measure of the movement path of the moving machine part (20) and/or the movement path of the camera (18) for the comparison.

7. The safety system according to any of the preceding claims,
wherein the control and evaluation unit (24) is configured to determine a constant offset between the movement path of the moving machine part (20) and the movement path of the camera (18).

8. The safety system according to any of the preceding claims,
wherein the camera (18) is mounted on or in the vicinity of a hazardous machine part (20).

9. The safety system according to any of the preceding claims,
wherein a plurality of cameras (18) are mounted on the machine (10) to determine the movement of a plurality of moving machine parts (20).

10. The safety system according to any of the preceding claims,
having at least one external sensor (30) for detecting objects in the surroundings of the machine (10), wherein the control and evaluation unit (24) is configured to safeguard the machine (10) on the basis of the detected objects and the path of movement of the machine part (20).

11. A method for monitoring a machine (10), in particular a robot, in which a movement path of at least one moving machine part (20) is determined by means of at least one position sensor (12a-e),
**characterized in that**, in order to check the movement path obtained by means of the position sensor (12a-e), at least one co-moving camera (18) is attached to the moving machine part (20) which, during the movement of the moving machine part (20), acquires an image sequence of the surroundings of the machine (10) from the first-person perspective, **in that** a movement path of the camera (18) is determined from the image sequence, and **in that** at least a section of the movement path of the moving machine part (20) and the movement path of the camera (18) are compared with one another for safe detection of the movement of the machine (10), so that the movement path of the moving machine part (20) is determined with diverse redundancy by means of position sensor (12a-e) and camera (18) and thus a safe movement monitoring is achieved.

## Revendications

1. Système de sécurité pour surveiller une machine (10), en particulier un robot, comprenant au moins un capteur de position (12a - e) pour déterminer la configuration d'au moins une partie mobile (20) de la machine, une commande de machine (16) reliée au capteur de position (12a - e) pour déterminer, à partir de ses données de capteur, une trajectoire de mouvement de la partie mobile (20) de la machine, et une unité de commande et d'évaluation (24) qui est en liaison de communication avec la commande de machine (16),
**caractérisé en ce que**
pour surveiller la trajectoire de mouvement obtenue à l'aide du capteur de position (12a - e), au moins une caméra embarquée (18) est montée sur la partie mobile (20) de la machine pour enregistrer, pendant son mouvement, une séquence d'images de l'environnement de la machine (10) en vue à la première personne,
il est prévu une unité d'évaluation d'images (22) pour déterminer une trajectoire de mouvement de la caméra (18) à partir de la séquence d'images et pour la transmettre à l'unité de commande et d'évaluation (24), et **en ce que**
l'unité de commande et d'évaluation (24) est réalisée pour comparer entre elles au moins une portion de la trajectoire de mouvement de la partie mobile (20) de la machine et une portion de la trajectoire de mouvement de la caméra (18), de sorte que la trajectoire de mouvement de la partie mobile (20) de la machine est déterminée de manière diversitaire et redondante à l'aide du capteur de position (12a - e) et de la caméra (18) et qu'une surveillance sécurisée du mouvement est obtenue.

2. Système de sécurité selon la revendication 1,
dans lequel la partie mobile (20) de la machine est reliée à la machine (10) par une articulation, et le capteur de position (12a - e) détermine la position de l'articulation.

3. Système de sécurité selon la revendication 1 ou 2,
dans lequel le capteur de position (12a - e) est un capteur inductif, capacitif ou magnétique ou un codeur.

4. Système de sécurité selon l'une des revendications précédentes,
dans lequel la caméra (18) est montée ultérieurement et/ou de manière amovible sur la machine (10).

5. Système de sécurité selon l'une des revendications précédentes,
dans lequel l'unité d'évaluation d'images (22) est réalisée pour déterminer la trajectoire de mouvement de la caméra (18) en utilisant le principe dit Structure from Motion (structure acquise à partir d'un mouvement).

6. Système de sécurité selon l'une des revendications précédentes,
dans lequel l'unité de commande et d'évaluation (24) est réalisée pour déterminer à des fins de comparaison une mesure statistique de la trajectoire de mouvement de la partie mobile (20) de la machine et/ou de la trajectoire de mouvement de la caméra (18).

7. Système de sécurité selon l'une des revendications précédentes,
dans lequel l'unité de commande et d'évaluation (24) est réalisée pour déterminer un décalage constant entre la trajectoire de mouvement de la partie mobile (20) de la machine et la trajectoire de mouvement de la caméra (18).

8. Système de sécurité selon l'une des revendications précédentes,
dans lequel la caméra (18) est montée sur ou à proximité d'une partie de danger (20) de la machine.

9. Système de sécurité selon l'une des revendications précédentes,
dans lequel plusieurs caméras (18) sont montées sur la machine (10) pour déterminer le mouvement de plusieurs de parties mobiles (20) de la machine.

10. Système de sécurité selon l'une des revendications précédentes, comprenant au moins un capteur externe (30) pour détecter des objets dans un environnement de la machine (10), l'unité de commande et d'évaluation (24) étant réalisée pour sécuriser la machine (10) sur la base des objets détectés et de la trajectoire de mouvement de la partie de machine (20).

11. Procédé de surveillance d'une machine (10), en particulier d'un robot,
dans lequel une trajectoire de mouvement d'au moins une partie mobile (20) de la machine est déterminée à l'aide d'au moins un capteur de position (12a - e),
**caractérisé en ce que**
pour surveiller la trajectoire de mouvement obtenue à l'aide du capteur de position (12a - e), au moins une caméra embarquée (18) est montée sur la partie mobile (20) de la machine, qui enregistre une séquence d'images de l'environnement de la machine (10) en vue à la première personne, pendant le mouvement de la partie mobile (20) de la machine, une trajectoire de mouvement de la caméra (18) est déterminée à partir de la séquence d'images et
pour la détection sécurisée du mouvement de la machine (20), au moins une portion de la trajectoire de mouvement de la partie mobile (20) de la machine et une portion de la trajectoire de mouvement de la caméra (18) sont comparées l'une à l'autre, de sorte que la trajectoire de mouvement de la partie mobile (20) de la machine est déterminée de manière diversitaire et redondante à l'aide du capteur de position (12a - e) et de la caméra (18) et qu'une surveillance sécurisée du mouvement est obtenue.
